# EUROPÄISCHE PATENTANMELDUNG

(11) **EP 4 138 284 A1**
(43) Veröffentlichungstag der Anmeldung: **22.02.2023**
(21) Anmeldenummer: 22190737.1
(22) Anmeldetag: 17.08.2022
(51) Int. Cl.: H02K 15/06

(54) **VERFAHREN UND VORRICHTUNG ZUM VORSTECKEN EINER WICKLUNGSANORDNUNG**

(30) Priorität: 18.08.2021 EP 21191831; 22.11.2021 EP 21209557
(71) Anmelder: Miba Automation Systems Ges.m.b.H., 4663 Laakirchen (AT)
(72) Erfinder: Schifflhuber, Andreas, 4663 Laakirchen (AT); Bachmayr, Günther, 4663 Laakirchen (AT)
(74) Vertreter: Harringer, Thomas

(57) **Zusammenfassung**

Die Erfindung betrifft ein Verfahren und eine Vorrichtung zum Vorstecken einer Wicklungsanordnung einer elektromagnetischen Wicklung eines Stators und/oder Rotors vor dem Einführen der Wicklungsanordnung in das Statorblechpaket. Mit einer geeigneten Vorsteckaufnahme 1 werden U-förmige Leiterstäbe zu einem Wicklungskorb angeordnet. Dabei wird beim Vorstecken der Leiterstäbe in einem ersten Schritt eine nicht geschlossene ringförmige Wicklungsstruktur 2 gebildet, wobei sich die beiden Enden 34 der offenen ringförmigen Wicklungsstruktur in einem Überlappungsbereich 33 in radialer Richtung überlappen und in einem zweiten Schritt durch Zusammenführen der beiden Enden eine geschlossene Wicklungsstruktur entsteht.

## Beschreibung

Die Erfindung betrifft ein Verfahren und eine Vorrichtung zum Vorstecken einer Wicklungsanordnung einer elektromagnetischen Wicklung eines Stators und/oder Rotors vor dem Einführen der Wicklungsanordnung in das Statorblechpaket, mit einer geeigneten Vorsteckaufnahme zum Anordnen von U-förmigen Leiterstäben zu einem Wicklungskorb.

Aus dem Stand der Technik sind verschiedene Verfahren und Vorrichtungen zum Vorstecken von Leiterstäben zu einer Wicklungsanordnung bekannt.

Beispielsweise ist aus der WO2018233769A1 bekannt mittels Rotation eines Leiterstabschenkels in einem Aufnahmeelement den zweiten Leiterstabschenkels in einer zugehörigen Nut zu positionieren und nachfolgend den auf diese Weise gesteckten Wicklungskranz zum Fügen in ein Statorblechpaket bereit zu stellen.

Aus der JP 2013 165540 A, EP 3 577 747 A1, JP 2003 324911 A, WO 2006/110498 A1 und WO 2018/039806 A2 sind weitere Verfahren und Vorrichtungen zum Herstellen einer Wicklung bekannt.

Es ist eine Aufgabe der vorliegenden Erfindung den Stand der Technik zu verbessern. Diese Aufgabe wird durch ein Verfahren nach Anspruch 1 sowie eine Vorrichtung nach Anspruch 9 gelöst.

Durch das neue Verfahren und die neue Vorrichtung ist ein besonders einfaches und effizientes Ausbilden einer Wicklungsanordnung, insbesondere eines Kranzes, möglich. Das neue Vorsteckwerkzeug ermöglicht eine neue Methode zum Schließen eines Kranzes ohne komplexe Bewegungsabläufe und ohne Beschädigungen und/oder ungewünschte Verformungen der Leiterstäbe.

Durch das neue Verfahren und die neue Vorrichtung ist es nach einer weiteren Ausführungsform möglich die Leiterstäbe ohne weitere Positionierungs- und Korrekturschritte entlang der gesamten Kranzbahn in Endposition zu stecken. Somit wird die Komplexität aus dem Vorgang des Vorsteckens und der Anordnung von Leiterstäben herausgenommen und die Gefahr der Kollision der Leiterstäbe im letzten Stecksegment aufgrund der Anordnung bzw. Führung vollends vermieden. Die aus dem Stand der Technik üblichen durch zusätzliche prozessempfindliche Positionier- und Korrekturschritte gekennzeichneten Verfahren zum Eindrehen und/oder Aufrollen von Leiterstäben zu einem Wicklungskranz, werden damit grundsätzlich umgangen. Das Vorstecken der Leiterstäbe kann hierbei manuell oder teil- bzw. vollautomatisiert erfolgen. Sowohl das Verfahren des Vorsteckens als auch das Abstützen der Leiterstäbe beim bzw. direkt nach dem Vorstecken kann auf manuelle, mechanische, pneumatische oder elektromagnetische Art und Weise erfolgen. Unabhängig von dem Vorsteckprozess liegt das Besondere der Erfindung in der neuartigen Ausbildung einer geschlossenen Wicklungsanordnung.

Durch das neue Verfahren und die neue Vorrichtung ist es nach einer weiteren Ausführungsform möglich die Aufnahmeelemente für die Leiterstäbe ohne Freiraum zum Manipulieren auszulegen und somit kompakt herzustellen. Damit wird der Nachteil des aus dem Stand der Technik bekannten großzügigen benötigten Freiraums zwischen den Leiterstäben eines Wicklungskorbs vor dem Ausbilden des Wicklungskorbs geschickt vermieden.

Durch das neue Verfahren und die neue Vorrichtung ist es nach einer besonderen Ausführungsform möglich die nicht geschlossene Vorsteckvorrichtung flexibel und elastisch verformbar und/oder einteilig auszubilden, sodass die vollständig bestückte Vorrichtung durch den Schritt des Schließens der Vorrichtung einen Wicklungskranz aus Leiterstäben ausbildet.

Diese Aufgabe wird durch ein Verfahren und eine Vorrichtung gemäß den Ansprüchen gelöst.

Nach einer besonderen Ausführungsform der Erfindung ist ein neuartiges Verfahren zur Herstellung eines Wicklungskorbes einer elektromagnetischen Wicklung eines Stator und/oder Rotors aus einer Vielzahl von elektrisch leitfähigen U-förmigen Leiterstäben vorgesehen, wobei jeder Leiterstab zwei im wesentlichen gerade Leiterstababschnitte aufweist, die durch einen Verbindungsabschnitt verbunden sind und wobei die bereit gestellten Leiterstäbe außerhalb des Stators und/oder Rotors mit einer geeigneten Vorsteckvorrichtung vorgesteckt werden, dadurch gekennzeichnet, dass beim Vorstecken der Leiterstäbe in einem ersten Schritt eine nicht geschlossene ringförmige Wicklungsstruktur gebildet wird, wobei sich die beiden Enden der offenen ringförmigen Wicklungsstruktur in einem Überlappungsbereich in radialer Richtung überlappen und die beiden Enden in radialer Richtung in einem Mindestabstand angeordnet sind, so dass die beiden Enden der offenen ringförmigen Wicklungsstruktur in einem zweiten Schritt durch Zusammenführen in radialer Richtung so miteinander kombiniert werden, dass eine geschlossene ringförmige Wicklungsstruktur als Wicklungskorb entsteht.

Durch das neue Verfahren und die neue Vorrichtung werden zwei wesentliche Funktionen gelöst, zum einen das positionierte Halten oder Abstützen der Leiterstäbe, dass durch ein Vorstecknest ermöglicht wird, zum anderen die Erzeugung eines radialen Versatzes der Leiterstäbe vor dem Schließen des Wicklungskranzes, dass durch die Führungsvorrichtung ermöglicht wird. Hierbei handelt es sich um zwei separate Teile, die miteinander zusammenwirken und gemeinsam die Vorsteckvorrichtung bilden.

Denkbar ist ebenso eine einteilige Ausführung der Vorsteckvorrichtung, bei der das Vorstecknest gleichzeitig die Führungsvorrichtung ist. Der radiale Leiterstabversatz in der offenen Wicklungsanordnung wird hierbei durch das Vorstecknest vorgegeben. Das Schließen der Wicklungsanordnung zu einem geschlossenen Wicklungskranz erfolgt je nach Ausführungsform entweder bei der zweiteiligen Vorsteckvorrichtung nach dem Entfernen der Führungsvorrichtung oder bei der einteiligen Vorsteckvorrichtung in der Führungsvorrichtung bzw. dem Vorstecknest selbst.

Nach einer besonderen Ausführungsform wird der Mindestabstand definiert als der Abstand zwischen der äußeren Kontur der in radialer Richtung weiter innen liegenden Gruppe von Verbindungsabschnitten und der inneren Kontur des in radialer Richtung weiter außen liegenden Gruppe von Verbindungsabschnitten, wobei jede Gruppe von Verbindungsabschnitten je ein Ende der offenen ringförmigen Wicklungsstruktur ausbildet. Nach einer besonderen Ausführungsform wird durch Zusammenführen von beiden Enden der offenen ringförmigen Wicklungsstruktur ein Wicklungskorb ausgebildet.

Nach einer besonderen Ausführungsform beträgt der der Mindestabstand der beiden Enden der nicht-geschlossenen ringförmigen Wicklungsstruktur in radialer Richtung 1 mm, vorzugsweise 5 mm, besonders bevorzugt 18 mm.

Nach einer besonderen Ausführungsform werden die überlappenden Enden der offenen ringförmigen Wicklungsstruktur im Bereich der Verbindungsabschnitte im dem Überlappungsbereich in radialer Ausrichtung in dem Mindestabstand beabstandet.

Nach einer besonderen Ausführungsform wird das radial gesehen innere Ende der offenen ringförmigen Wicklungsstruktur zur Herstellung der geschlossenen ringförmigen Wicklungsstruktur, insbesondere im Bereich der Verbindungsabschnitte, radial nach außen geführt oder das radial gesehen äußere Ende der offenen ringförmigen Wicklungsstruktur zur Herstellung der geschlossenen ringförmigen Wicklungsstruktur, insbesondere im Bereich der Verbindungsabschnitte, radial nach innen geführt, sodass sich die Verbindungsabschnitte des inneren Endes der offenen ringförmigen Wicklungsstruktur mit dem äußeren Ende der offenen ringförmigen Wicklungsstruktur zur geschlossenen ringförmigen Wicklungsstruktur verbinden.

Nach einer besonderen Ausführungsform wird in dem Schritt des Zusammenführens beide Enden oder ein Ende der Wicklungsstruktur bewegt, sodass sich der Abstand zwischen den beiden Enden der Wicklungsstruktur verringert.

Nach einer besonderen Ausführungsform werden beim Vorstecken der Leiterstäbe die geraden Leiterstababschnitte so positioniert, dass die freien Enden der geraden Leiterstababschnitten von zwei benachbarten U-förmigen Leiterstäben in der offenen ringförmigen Wicklungsstruktur im Wesentlichen am Umfang einer kreisförmigen oder kreisähnlichen Kontur angeordnet und die freien Enden liegen in radialer Richtung in einem Maximalabstand von 10 mm, vorzugsweise 0,5 bis 1 mm, besonders bevorzugt 0 mm, aneinander an.

Nach einer besonderen Ausführungsform werden die Leiterstäbe in dem ersten Schritt beim Vorstecken der Leiterstäbe so positioniert, dass die freien Enden der geraden Leiterstababschnitte in der offenen ringförmigen Wicklungsstruktur im Überlappungsbereich in radialer Richtung in einem Mindestabstand von 1 mm, vorzugsweise 5 mm, besonders bevorzugt 18 mm, angeordnet sind.

Nach einer besonderen Ausführungsform ist eine Vorsteckvorrichtung mit Führungsvorrichtung vorgesehen und die Führungsvorrichtung weist drei Bereiche mit unterschiedlichen Größen von nutförmigen Aufnahmeelemente zur Aufnahme der Enden der geraden Leiterstababschnitte auf, wobei der erste Bereich an dem ersten Ende der nicht-geschlossenen ringförmigen Wicklungsstruktur und der dritte Bereich an dem zweiten Ende der offenen ringförmigen Wicklungsstruktur vorgesehen ist und der zweite Bereich zwischen dem ersten und dem dritten Bereich angeordnet ist, und die Größe der nutförmigen Aufnahmeelemente der Bereiche so ausgestaltet ist, dass die radiale Ausdehnung der nutförmigen Aufnahmeelement in dem ersten Bereich und in dem dritten Bereich jeweils im Mittel geringer ist als die radiale Ausdehnung der nutförmigen Aufnahmeelemente im zweiten Bereich und die beiden Enden der offenen ringförmigen Wicklungsstruktur im Überlappungsbereich radial zur Bildung der geschlossenen ringförmigen Wicklungsstruktur zusammen geführt werden und im Überlappungsbereich jeweils ein Aufnahmeelement des ersten Bereichs mit jeweils einem Aufnahmeelement des dritten Bereichs ein Paar von radial benachbart angeordneten Aufnahmeelementen bildet.

Sowohl einteilige als auch mehrteilige Vorsteckvorrichtungen werden nach demselben Verfahrensprinzip angewandt, indem der Wicklungskranz durch radiales Zusammenführen der Verbindungsabschnitte der Stableiter entsteht.

Nach einer besonderen Ausführungsform ist ein Verfahren zur Herstellung einer elektromagnetischen Wicklung eines Stators und/oder Rotors aus mehreren Wicklungskörben mit unterschiedlichem Durchmesser vorgesehen, dadurch gekennzeichnet, dass die Wicklungskörbe konzentrisch ineinander angeordnet werden und damit die Wicklung des Stators ergeben.

Bevorzugt ist eine Ausführungsform, bei der mehrere geschlossene ringförmige Wicklungsstrukturen nacheinander in einer Vorsteckvorrichtung, welche als Aufnahme für Leiterstäbe dient, ausgebildet werden, wobei die letzte der mehreren geschlossenen ringförmigen Wicklungsstrukturen stets auf einer in axialer Ausrichtung höheren Ebene ausgebildet wird. Idealerweise weist jede der mehreren geschlossenen Wicklungsstrukturen einen Versatz in axialer Ausrichtung zueinander auf, sodass sich ein stufenweiser Aufbau der geschlossenen ringförmigen Wicklungsstrukturen entlang der Längsachse ergibt.

Bevorzugt ist eine Ausführungsform, bei der mehrere offene ringförmige Wicklungsstrukturen mit unterschiedlichen Durchmesser auf einer gemeinsamen Längsachse ineinander liegen und durch gleichzeitiges oder nacheinander abfolgendes Zusammenführen aller offenen Wicklungsstrukturen zu je einer geschlossenen Wicklungsstruktur ausgebildet werden.

Nach einer besonderen Ausführungsform ist ein Verfahren zur Herstellung einer elektromagnetischen Wicklung eines Stators und/oder Rotors vorgesehen, dadurch gekennzeichnet, dass die Wicklung nachfolgend in geeignete Ausnehmungen eines Maschinenelementes eines Stators und/oder Rotors eingeführt wird.

Nach einer besonderen Ausführungsform der Erfindung ist eine neuartige Vorrichtung zur Herstellung eines Wicklungskorbes einer elektromagnetischen Wicklung eines Stator und/oder Rotors aus einer Vielzahl von elektrisch leitfähigen U-förmigen Leiterstäben vorgesehen, wobei jeder Leiterstab zwei im wesentlichen gerade Leiterstababschnitten aufweist, die durch einen Verbindungsabschnitt verbunden sind, und wobei die Leiterstäbe außerhalb des Stators und/oder Rotors mit einer geeigneten Vorsteckvorrichtung vorgesteckt werden, dadurch gekennzeichnet, dass die Vorsteckvorrichtung eine Führungseinrichtung aufweist, so dass die Leiterstäbe durch die Führungseinrichtung in einer offenen ringförmigen Wicklungsstruktur mit in radialer Richtung mit einem Mindestabstand überlappend anordenbaren Enden positionierbar sind.

Nach einer besonderen Ausführungsform ist die Führungseinrichtung der Vorsteckeinrichtung in einen bereits ausgebildeten Wicklungskorb einsetzbar, wobei der Außendurchmesser der Führungseinrichtung kleiner ist, als der Innendurchmesser des ausgebildeten Wicklungskorbs, sodass die Außenkontur der Führungseinrichtung eine abstützende Wirkung für einen angrenzenden außenliegenden Wicklungskorb ermöglicht.

Nach einer besonderen Ausführungsform beträgt der Mindestabstand der beiden Enden der nicht-geschlossenen ringförmigen Wicklungsstruktur in radialer Richtung 1 mm, vorzugsweise 5 mm, besonders bevorzugt 18 mm.

Nach einer besonderen Ausführungsform ist die Führungseinrichtung der Vorsteckvorrichtung so eingerichtet, dass die nicht geschlossene ringförmige Wicklungsstruktur auf einer gekrümmten Linie mit mindestens einer Windung um einen festen Punkt anordenbar ist.

Nach einer besonderen Ausführungsform ist die Vorsteckvorrichtung zweiteilig aufgebaut und ein erster Teil der Vorsteckvorrichtung weist einen ersten Teil der Führungseinrichtung auf, wobei der erste Teil der Führungseinrichtung einen inneren und äußeren Ring aufweist, wobei zwischen dem ersten Ring und dem zweiten Ring ein Führungskanal eingerichtet ist, wobei der Führungskanal spiralähnlich um ein Zentrum herum geführt wird und sich der radiale Abstand des Führungskanals zum Zentrum hin über zumindest einen Teil der Länge des Führungskanals zumindest abschnittsweise verringert. Nach einer besonderen Ausführungsform ist die Führungseinrichtung der Vorsteckvorrichtung so eingerichtet, dass die nicht geschlossene Wicklungsstruktur spiralformähnlich anordenbar ist.

Nach einer besonderen Ausführungsform weist der zweite Teil der Vorsteckvorrichtung einen zweiten Teil der Führungseinrichtung auf, wobei in dem zweiten Teil der Führungseinrichtung eine Vielzahl von ringförmig angeordneten und axial verlaufenden Nuten um ein Zentrum vorgesehen ist, wobei die Nuten zur Aufnahme der im wesentlichen geraden Leiterstababschnitten der elektrisch leitfähigen U-förmigen Leiterstäbe vorgesehen sind und wobei der Nutquerschnitt an der Einführseite der Nuten größer ist als der Querschnitt in einem beliebigen Bereich der axialen Längserstreckung der Nut und/oder die im wesentlichen geraden Leiterstababschnitte je Nut durch ein, insbesondere federndes, Druckelement, vorzugsweise in einer Schrägstellung des geraden Leiterstababschnittes, axial und/oder radial fixierbar sind.

Nach einer besonderen Ausführungsform weist jede Nut des Vorstecknests ein Druckelement auf, wobei jedes Druckelement unabhängig voneinander in radialer Ausrichtung verstellbar ausgeführt ist und einen Leiterstab zur Nutbegrenzung oder zu einem weiter außen anliegenden Leiterstab fixiert.

Nach einer besonderen Ausführungsform ist der zweite Teil der Vorsteckvorrichtung gegenüber dem ersten Teil Vorsteckvorrichtung drehbar gelagert und verfügt über einen Drehantrieb.

Nach einer besonderen Ausführungsform ist im Überlappungsbereich als Teil der Führungseinrichtung ein verfahrbares Führungselement mit einer Gleitkontur vorgesehen, das die Führung der Leiterstäbe im Bereich des Überlappungsbereiches in radialer Richtung unterstützt.

Nach einer besonderen Ausführungsform ist die Führungsvorrichtung kranzförmig ausgeführt und weist definierte nutförmige Aufnahmeelemente auf, die zur Aufnahme der Enden der im wesentlichen geraden Leiterstababschnitten der elektrisch leitfähigen U-förmigen Leiterstäbe geeignet sind und die Führungseinrichtung zumindest im Überlappungsbereich zumindest teilweise elastisch um den Mindestabstand verformbar ist, so dass durch Zusammenführen der beiden Enden der offenen Wicklungsstruktur eine geschlossene ringförmige Wicklungsstruktur herstellbar ist.

Nach einer besonderen Ausführungsform wird der Mindestabstand der Führungsvorrichtung im Überlappungsbereich definiert als der Abstand zwischen zwei gedachten neutralen Fasern, wobei jede neutrale Faser entlang der Leiterstababschnitte je eines Endes der offenen Wicklungsstruktur verläuft.

Nach einer besonderen Ausführungsform weist die Führungsvorrichtung drei Bereiche mit unterschiedlichen Größen der nutförmigen Aufnahmeelemente auf, wobei der erste Bereich an dem ersten Ende der offenen ringförmigen Wicklungsstruktur und der dritte Bereich an dem zweiten Ende der offenen ringförmigen Wicklungsstruktur vorgesehen ist und der zweite Bereich zwischen dem ersten und dem dritten Bereich angeordnet ist, und die Größe der nutförmigen Aufnahmeelemente der Bereiche so ausgestaltet ist, dass die radiale Ausdehnung der nutförmigen Aufnahmeelement in dem ersten Bereich und in dem dritten Bereich jeweils im Mittel geringer ist als die radiale Ausdehnung der nutförmigen Aufnahmeelemente im zweiten Bereich und die beiden Enden der offenen ringförmigen Wicklungsstruktur im Überlappungsbereich radial zur Bildung der geschlossenen ringförmigen Wicklungsstruktur zusammen geführt werden und im Überlappungsbereich jeweils ein Aufnahmeelement des ersten Bereichs mit jeweils einem Aufnahmeelement des dritten Bereichs ein Paar von radial benachbart angeordneten Aufnahmeelementen bildet.

Nach einer besonderen Ausführungsform ist nur ein Ende eines Leiterstabes in radialer Richtung in einem der Aufnahmeelemente aufnehmbar und in dem zweiten Bereich sind jeweils nur zwei Enden der Leiterstäbe in radialer Richtung hintereinander in einer der Aufnahmeelemente aufnehmbar.

Die Erfindung wird nachfolgend anhand von möglichen Ausführungsbeispielen in mehreren nicht-einschränkenden schematischen Darstellungen erläutert.

Es zeigen:
Fig. 1 eine bevorzugte Ausführungsform einer beispielhaften Führungsvorrichtung in der Aufsicht
Fig. 2 eine bevorzugte Ausführungsform einer beispielhaften Führungsvorrichtung in einer räumlichen Ansicht
Fig. 3 eine schematische Ausführungsform eines Hairpins
Fig. 4 eine zweite Ausführungsform einer beispielhaften Führungsvorrichtung
Fig. 5 eine erste Ausführungsform eines beispielhaften Vorstecknests in der Schnittansicht
Fig. 6 eine erste Ausführungsform eines beispielhaften Vorstecknests in einer räumlichen Ansicht
Fig. 7 eine erste Ausführungsform einer beispielhaften Vorsteckvorrichtung in einer räumlichen Ansicht
Fig. 8 eine erste Ausführungsform einer beispielhaften Vorsteckvorrichtung mit mehreren Wicklungsstrukturen
Fig. 9 eine zweite Ausführungsform einer beispielhaften Vorsteckvorrichtung in einem ersten Verfahrensschritt
Fig. 10 eine zweite Ausführungsform einer beispielhaften Vorsteckvorrichtung in einem ersten Verfahrensschritt in einer räumlichen Ansicht
Fig. 11 eine bevorzugte Ausführungsform einer beispielhaften Vorsteckvorrichtungsaufnahme
Fig. 12 eine zweite Ausführungsform einer beispielhaften Vorsteckvorrichtung in einem zweiten Verfahrensschritt
Fig. 13 eine zweite Ausführungsform einer beispielhaften Vorsteckvorrichtung in einem zweiten Verfahrensschritt in einer räumlichen Ansicht
Fig. 14 eine Ausführungsform einer beispielhaft bestückten Vorsteckvorrichtung in der Aufsicht

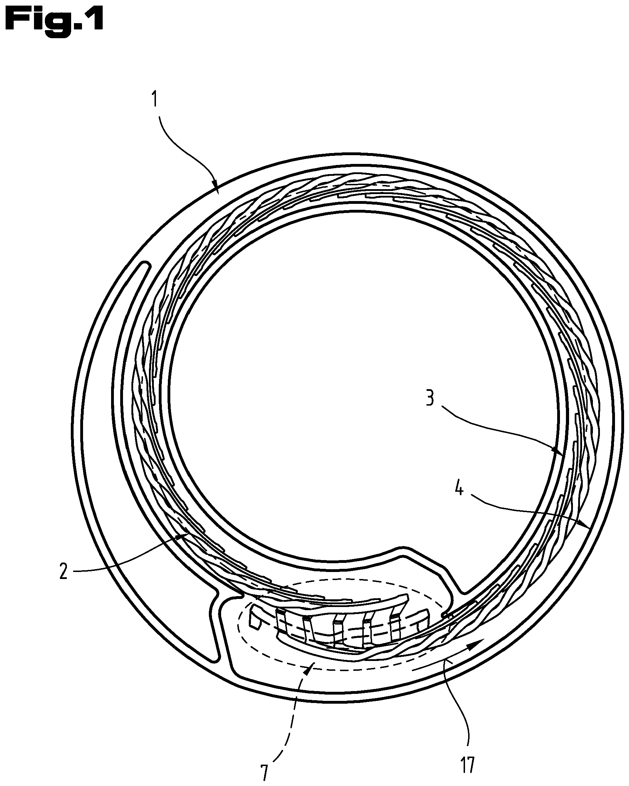

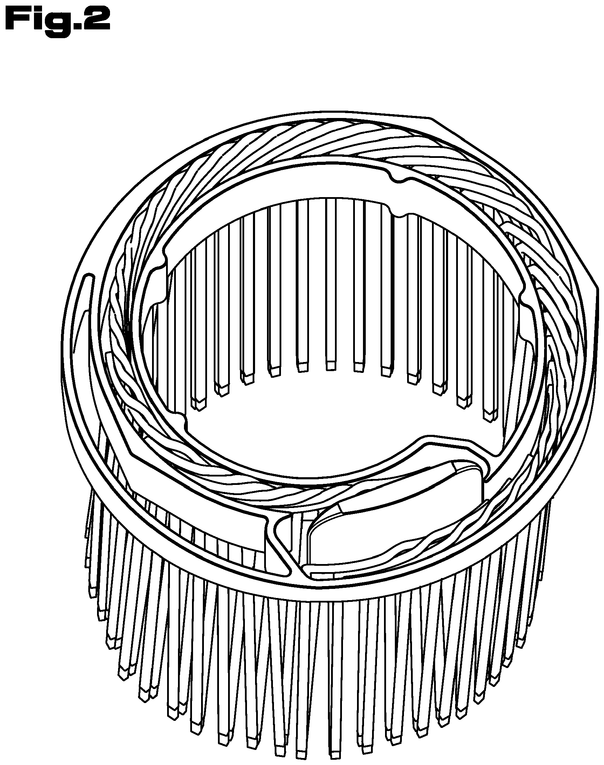

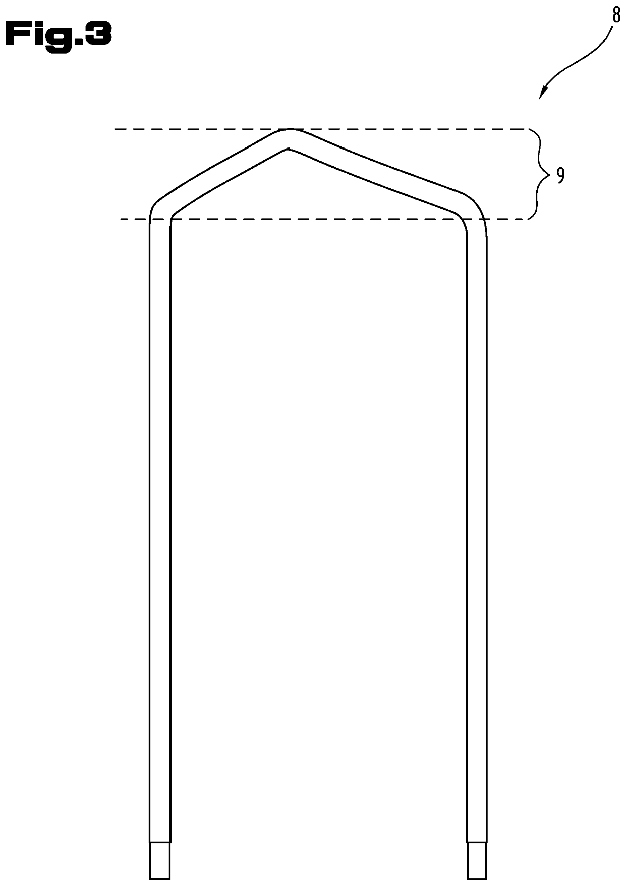

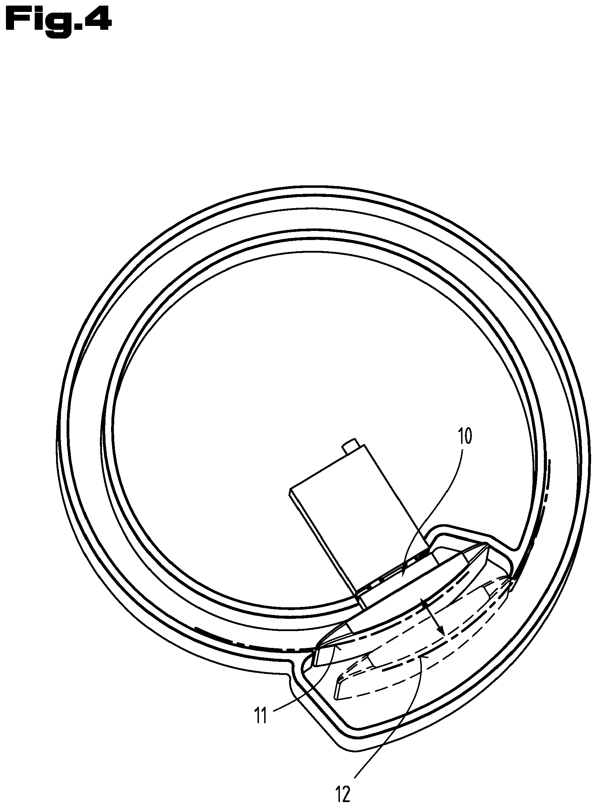

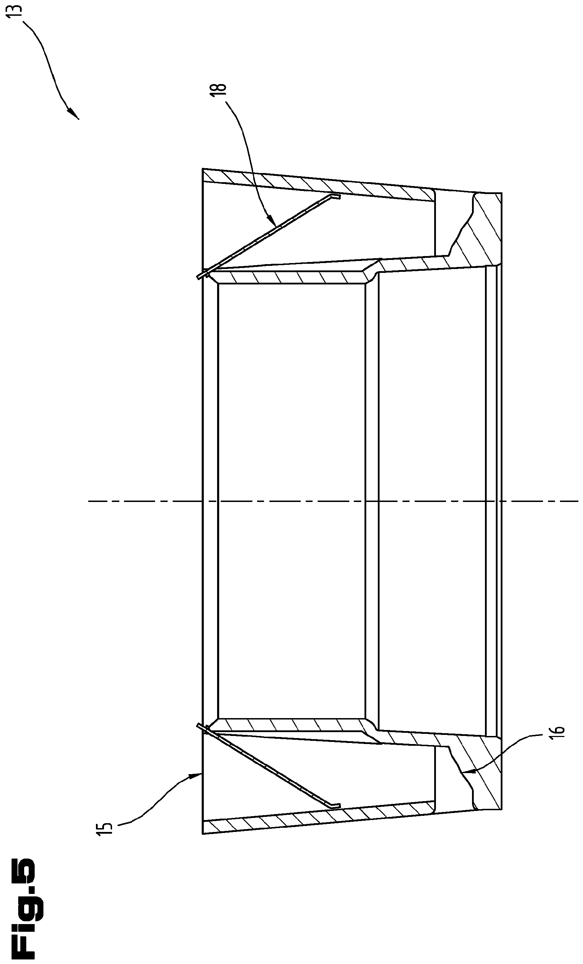

In Fig 1 und Fig 2 ist eine mögliche Ausführungsform einer Führungseinrichtung (1) beispielhaft dargestellt. Diese weist einen gekrümmten und/oder spiralformähnlichen Führungskanal auf, der durch einen inneren (3) und äußeren (4) Begrenzungsbereich definiert und umfänglich ohne Unterbrechungen ausgeführt ist. Durch ein Fixierwerkzeug (5) einer geeigneten Einführvorrichtung (6) werden die Hairpins (8) abwechselnd in den Einführbereich (7) der Führungseinrichtung von oben, bevorzugt in axialer Ausrichtung eingesetzt und entlang des Führungskanals umfänglich in einer vorgegebenen Richtung (17) getaktet. Die als Schablone dienende Führungseinrichtung (1) ordnet die in Fig 3 gezeigten Verbindungsabschnitte (9) von Hairpins (8) einer Wicklungsstruktur auf einer spiralformähnlichen Bahn an, sodass im Einführbereich (7) Freiraum zwischen zwei Hairpinanorndnungen zum Bestücken der letzten Hairpins eines Wicklungskorbs entsteht. Mit Hilfe von in Fig 5 beispielhaft dargestellten Fixierelementen (18) wird der Hairpin nach dem Einführen nach Außen in radialer Ausrichtung gekippt, sodass die Leiterschenkel eine in axialer Ausrichtung vorgegebene Schrägstellung aufweisen. Vor dem Schritt des umfänglichen Verschiebens des Hairpins nimmt der Abschieber (10) eine ausgefahrene Endposition (12) ein. Nach dem umfänglichen Takten fährt der Abschieber (10) in eine Grundstellung (11), sodass der nächste Hairpin eingesetzt werden kann. Eine mögliche Ausführungsform des Abschiebers (10) ist nach Fig 4 über der Führungseinrichtung (1) anordenbar und/oder mit der Führungseinrichtung (1) formschlüssig verbunden.

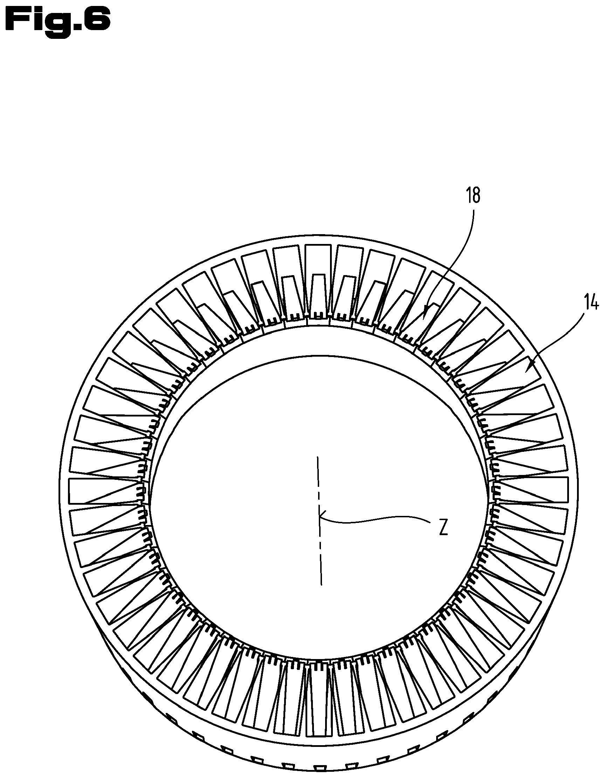

In Fig 5 und Fig 6 ist eine beispielhafte Ausführungsform des Vorstecknests (13) ersichtlich. Das Vorstecknest (13) weist eine Vielzahl von ringförmig angeordneten Nuten (14) um ein Zentrum Z auf, wobei die Nutbegrenzungen derart ausgeführt sind, dass der Querschnitt im Nuteinsetzbereich (15) größer ist als der Querschnitt in der Nuterstreckung und/oder Nutendbereich (16). Diese Nutgeometrie ermöglicht ein Auffächern des Wicklungskopfs durch eine axiale Schrägstellung der Leiterschenkel nach dem Prinzip einer herkömmlichen Blumenvase.

Eine weitere Ausführungsform des Vorstecknests (13) weist Fixierelemente (18) in den Nuten (14) auf, wobei je ein Fixierelement (18) pro Nut den gefügten Hairpin in der Nut sichert und/oder in radialer Ausrichtung nach außen drückt. Nach dem Fügen eines einzelnen Hairpins in die vorgesehenen Nuten des Vorstecknests (13) können die zugehörigen Fixierelemente (18) unabhängig voneinander in eine fixierende radial weiter außen liegende Endposition als auch in die freie radial weiter innen liegende Grundstellung bewegt werden.

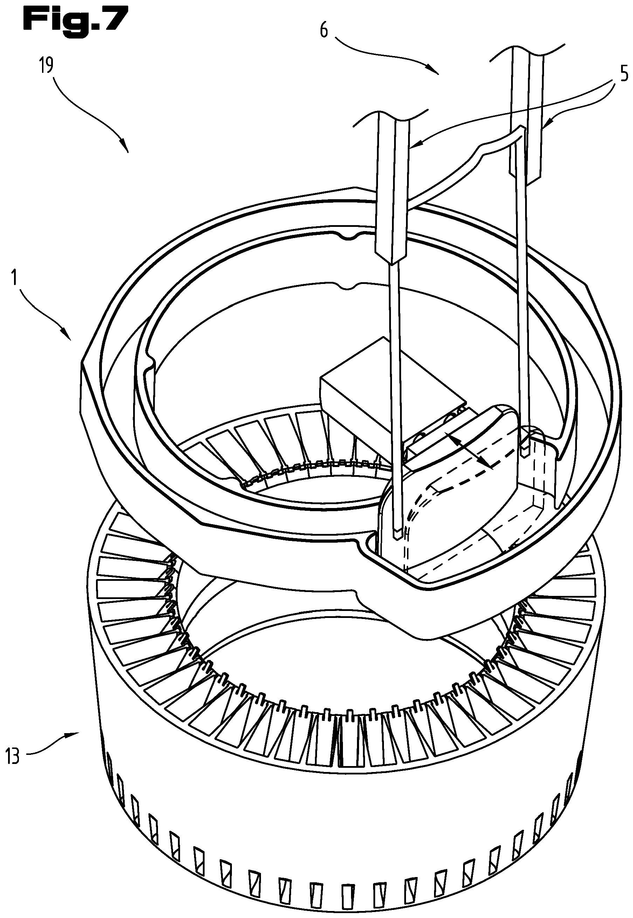

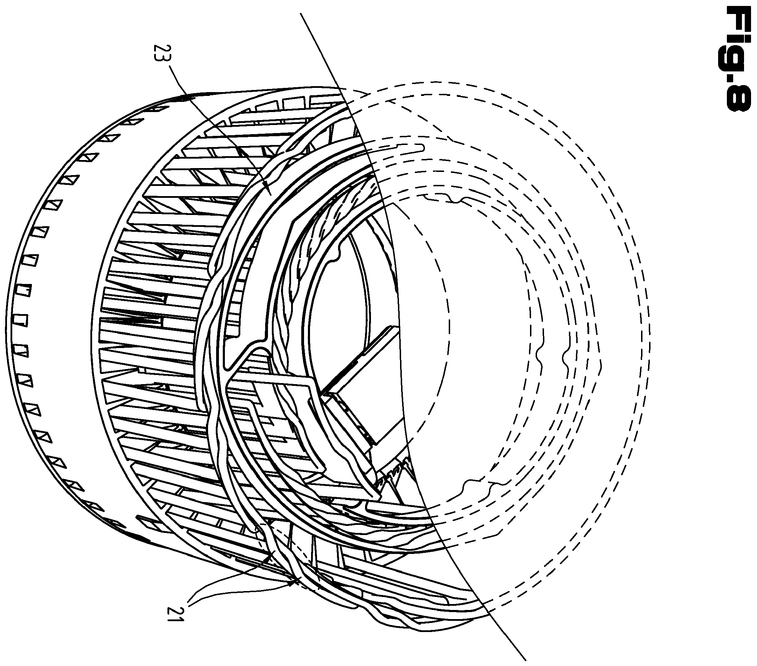

Fig 7 und Fig 8 beschreiben beispielhaft eine mögliche Ausführungsform der Vorsteckvorrichtung (19), die durch zwei separate Teile gebildet wird, und das Zusammenwirken der starr positionierten Führungsvorrichtung (1) mit dem drehbar gelagerten Vorstecknest (13). Die Anordnung beider Vorrichtungen zueinander erfolgt derart, dass durch das Fixierwerkzeug (5) einer geeigneten Einführvorrichtung (6) gefügte und durch den Abschieber (10) gekippte Hairpins stets in radialer Ausrichtung weiter außen liegen als bereits gefügte und über mehrere Segmente weiter getaktete Hairpins entlang des Führungskanals. Nach dem Einführen aller für eine offene Wicklungsstruktur benötigten Hairpins wird die Führungsvorrichtung (1) entfernt, sodass durch radiales Zusammenführen der beabstandeten Verbindungsabschnitte (9) von Hairpins von je einem Ende der Wicklungsanordnung, eine geschlossene Wicklungsstruktur, der sogenannte Wicklungskorb, ausgebildet wird.

In einer weiteren möglichen Ausführungsform zeigt Fig 8 die Vorsteckvorrichtung zum Anordnen einer Wicklungsstruktur bei einem bereits zuvor ausgebildeten Wicklungskorb (20). Die Ausbildung von Wicklungskörben erfolgt hier beispielweise von außen nach innen, sodass zuerst der in radialer Ausrichtung am weitesten außen liegende Wicklungskorb (21) ausgebildet wird und nacheinander radial weiter innenliegende Wicklungskörbe erstellt werden. Bereits ausgebildete und nach außen aufgefächerte Wicklungskörbe werden beispielsweise durch eine Vielzahl von Fixierelementen (18) in Position gehalten, wodurch das Einführen der Führungsvorrichtung (1) zur Ausbildung des nächstinnenliegenden Wicklungskorbs ermöglicht wird. Die kreisförmige Außengeometrie (23) der Führungsvorrichtung (1) stützt hierbei den von außen angrenzenden Wicklungskorb, sodass die Fixierelemente wahlweise in die nicht fixierende Grundstellung eingefahren werden können.

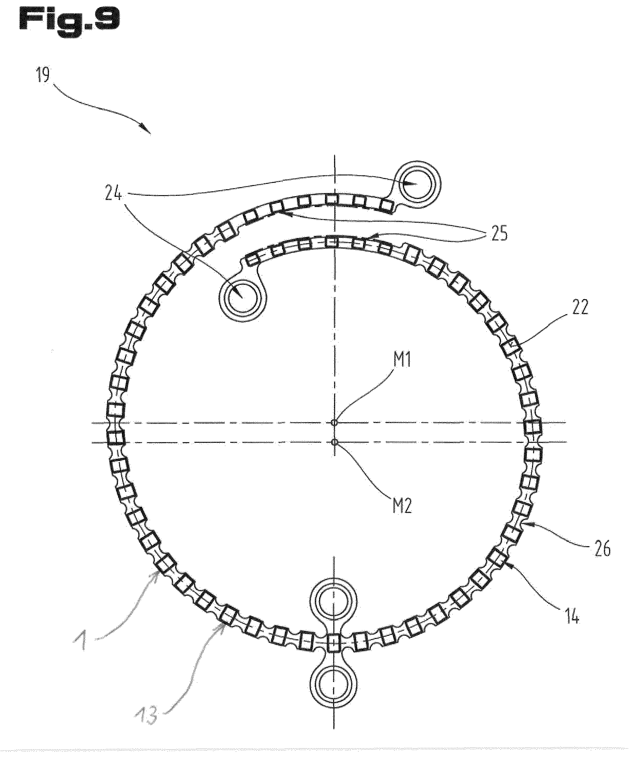

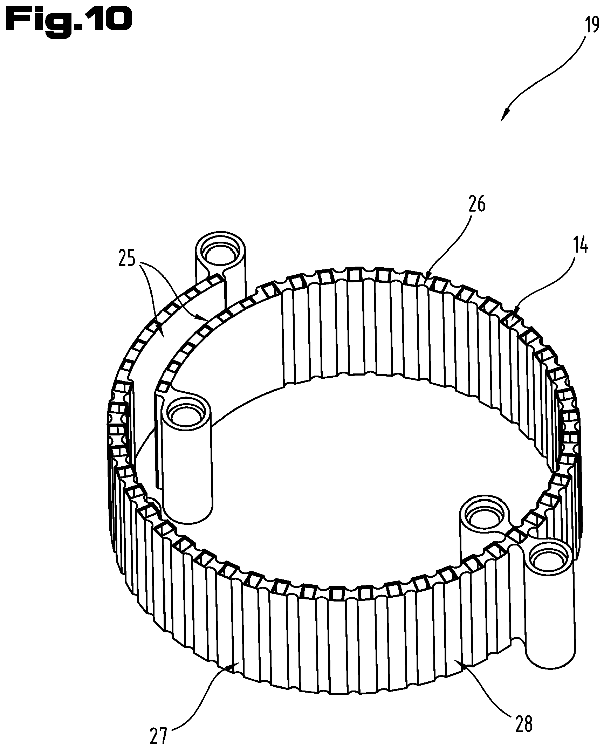

In Fig 9 und Fig 10 ist eine weitere mögliche Ausführungsform der Vorsteckvorrichtung (19) beispielhaft dargestellt und verdeutlicht eine mögliche technische Umsetzung von einteiligen Vorsteckvorrichtungen Die Vorrichtungsgeometrie ist einteilig ausgeführt und beschreibt in der Aufsicht eine gekrümmte Bahn (22), die im Ansatz der Spiralform ähnelt und durch zwei Mittelpunkte (M1) (M2) definiert ist.

Bei der Vorsteckvorrichtung handelt es sich um ein Vorstecknest (19), welches im Ausgangszustand ohne Krafteinleitung an den Angriffspunkten (24) zur Verformung der Geometrie offen ausgebildet ist, wobei die Endbereiche (25) der Vorrichtung voneinander beabstandet sind. Die Endbereiche (25) sind in radialer Ausrichtung überlappend angeordnet und bewegbar. Das Vorstecknest (13) erfüllt in der einteiligen Ausführungsform zugleich die Funktion der Führungsvorrichtung (1), sodass ein radialer Versatz der Endbereiche (25) ermöglicht wird. Durch die beispielsweise rippenartig ausgeführten Nuten (14) und konkav ausgeführten Zwischenbereiche (26) ist das gesamte Vorstecknest (19) elastisch dehnbar. Eine beispielsweise weniger elastische und fertigungstechnisch einfachere Variante ist ausführbar, sofern die Zwischenbereiche (27) keine zu den Nutaußengeometrien (28) abweichende Wölbungen aufweisen. Das Vorstecknest (19) weist eine Vielzahl von umfänglich gleichmäßig beabstandeten Nuten (14) auf, wobei die Nuten der Endbereiche (25) für die Aufnahme von je einem Leiterstab und die restlichen Nuten der Vorrichtung für die Aufnahme von je zwei Leiterstäben vorgesehen sind.

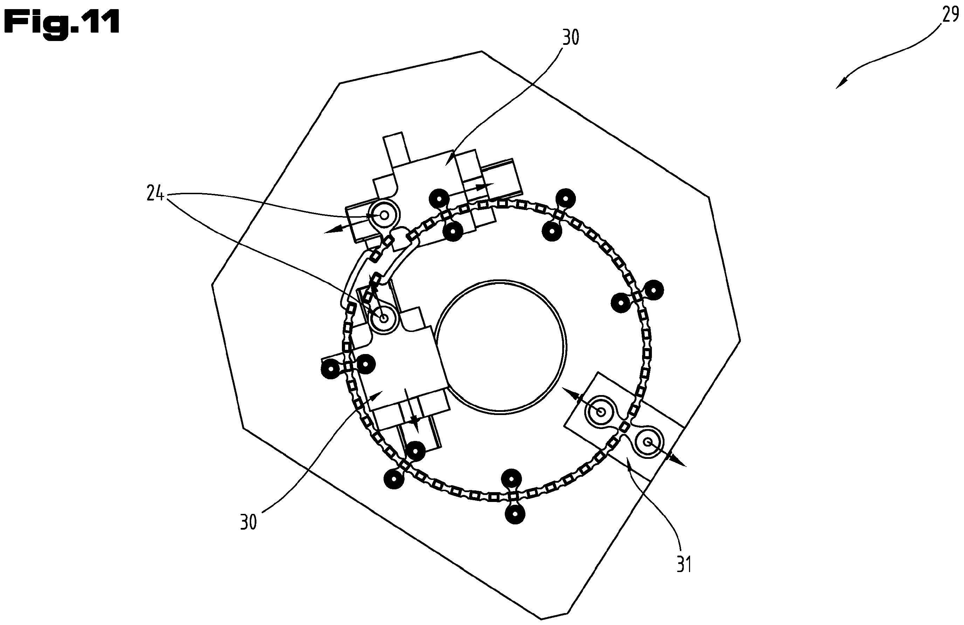

In Fig 11 ist eine beispielhafte Vorrichtungsaufnahme (29) ersichtlich. Das in der Vorrichtungsaufnahme (29) positionierte offene Vorstecknest ist unter Verwendung von Aktuatoren und/oder Antrieben (30) zur Krafteinleitung an den Angriffspunkten (24) verformbar, sodass sich der Abstand zwischen den überlappenden Endbereichen (25) verringert bis die Endbereiche aneinander anliegen und somit eine geschlossene Vorrichtungsstruktur ausbilden. Zusätzlich ist ein weiterer Antrieb (31) zum Ausgleichen der zwei Mittelpunkte (M1) (M2) des Vorstecknests einsetzbar.

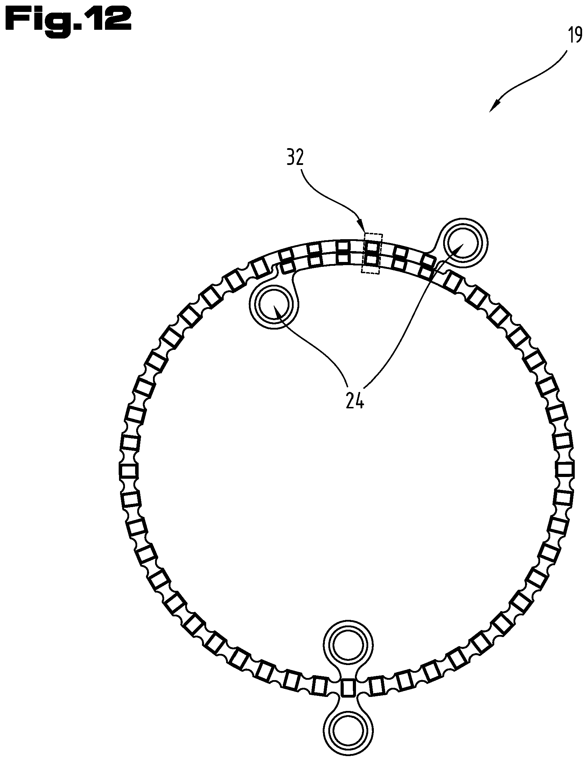

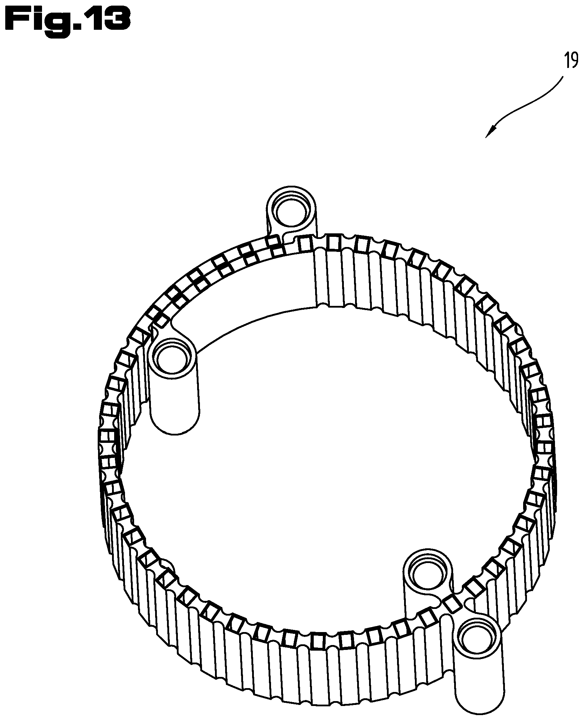

Fig 12 und Fig 13 stellt beispielhaft eine geschlossene Vorsteckvorrichtung (19) dar. Hierbei ist kennzeichnend, dass die Endbereiche des Vorstecknests (19) derart zusammengeführt sind, dass je eine Nut des einen Endbereichs einer zugehörigen zweiten Nut des zweiten Endbereichs gegenüberliegt und auf diese Weise ein Nutenpaar (32) ausbildet.

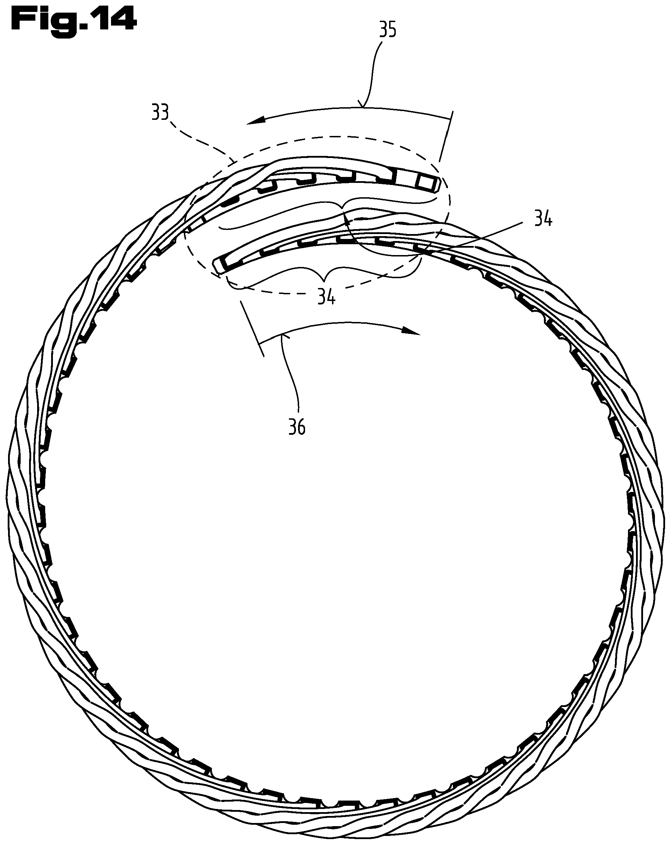

In Fig 14 ist eine mögliche Ausführungsform der mit Hairpins bestückten Vorsteckvorrichtung beispielhaft dargestellt. Hierbei erfolgt die Bestückung des Vorstecknests (19) mit Hairpins der Reihe nach aufeinanderfolgend in Richtung (35) angefangen mit der äußersten Nut eines Endbereichs. Die beabstandeten Endbereiche (25) der spiralformähnlichen Vorrichtungsgeometrie schaffen Freiraum zum Bestücken der letzten Hairpins einer Wicklungsstruktur (35). Das Einführen der Hairpins im letzten unbestückten Segmentausschnitt (34), insbesondere den zweiten Endbereich (25) umfassend, erfolgt ohne physische Kollision mit den Hairpins des ersten Endbereichs. Die Bestückung des Vorstecknests kann gegebenenfalls auch in umgekehrter Reihenfolge, beginnend mit der äußersten Nut eines Endbereichs in entgegengesetzter Richtung (36), erfolgen. Durch geeignetes Zusammenführen von beiden Endbereichen entsteht im Bereich der Überlappung (33) ein geschlossener Wicklungskorb.

## Patentansprüche

1. Verfahren zur Herstellung eines Wicklungskorbes einer elektromagnetischen Wicklung eines Stator und/oder Rotors aus einer Vielzahl von elektrisch leitfähigen U-förmigen Leiterstäben, wobei jeder Leiterstab zwei im wesentlichen gerade Leiterstababschnitte aufweist, die durch einen Verbindungsabschnitt verbunden sind und wobei die bereit gestellten Leiterstäbe außerhalb des Stators und/oder Rotors mit einer geeigneten Vorsteckvorrichtung vorgesteckt werden, **dadurch gekennzeichnet, dass** beim Vorstecken der Leiterstäbe in einem ersten Schritt eine nicht geschlossene ringförmige Wicklungsstruktur gebildet wird, wobei sich die beiden Enden der offenen ringförmigen Wicklungsstruktur in einem Überlappungsbereich in radialer Richtung überlappen und die beiden Enden in radialer Richtung in einem Mindestabstand angeordnet sind, so dass die beiden Enden der offenen ringförmigen Wicklungsstruktur in einem zweiten Schritt durch Zusammenführen in radialer Richtung so miteinander kombiniert werden, dass eine geschlossene ringförmige Wicklungsstruktur als Wicklungskorb entsteht.

2. Verfahren nach Anspruch 1, **dadurch gekennzeichnet, dass** der Mindestabstand der beiden Enden der nicht-geschlossenen ringförmigen Wicklungsstruktur in radialer Richtung 1 mm, vorzugsweise 5 mm, besonders bevorzugt 18 mm, beträgt.

3. Verfahren nach Anspruch 1 oder 2, **dadurch gekennzeichnet, dass** die überlappenden Enden der offenen ringförmigen Wicklungsstruktur im Bereich der Verbindungsabschnitte im dem Überlappungsbereich in radialer Ausrichtung in dem Mindestabstand beabstandet werden.

4. Verfahren nach einem der vorhergehenden Ansprüche, **dadurch gekennzeichnet, dass**
a. das radial gesehen innere Ende der offenen ringförmigen Wicklungsstruktur zur Herstellung der geschlossenen ringförmigen Wicklungsstruktur, insbesondere im Bereich der Verbindungsabschnitte, radial nach außen geführt wird oder
b. das radial gesehen äußere Ende der offenen ringförmigen Wicklungsstruktur zur Herstellung der geschlossenen ringförmigen Wicklungsstruktur, insbesondere im Bereich der Verbindungsabschnitte, radial nach innen geführt wird,
sodass sich die Verbindungsabschnitte des inneren Endes der offenen ringförmigen Wicklungsstruktur mit dem äußeren Ende der offenen ringförmigen Wicklungsstruktur zur geschlossenen ringförmigen Wicklungsstruktur verbinden.

5. Verfahren nach Anspruch 3 oder 4, **dadurch gekennzeichnet, dass** beim Vorstecken der Leiterstäbe die geraden Leiterstababschnitten so positioniert werden, dass die freien Enden der geraden Leiterstababschnitten von zwei benachbarten U-förmigen Leiterstäben in der offenen ringförmigen Wicklungsstruktur im Wesentlichen am Umfang einer kreisförmigen oder kreisähnlichen Kontur angeordnet werden und die freien Enden in radialer Richtung in einem Maximalabstand von 10 mm, vorzugsweise 0,5 bis1 mm, besonders bevorzugt 0 mm, aneinander anliegen.

6. Verfahren nach einem der Ansprüche 1 bis 5, **dadurch gekennzeichnet, dass** in dem ersten Schritt beim Vorstecken der Leiterstäbe die Leiterstäbe so positioniert werden, dass die freien Enden der geraden Leiterstababschnitte in der offenen ringförmigen Wicklungsstruktur im Überlappungsbereich in radialer Richtung in einem Mindestabstand von 1 mm, vorzugsweise 5 mm, besonders bevorzugt 18 mm, angeordnet sind.

7. Verfahren nach einem der Ansprüche 5 oder 6, **dadurch gekennzeichnet, dass** eine Vorsteckvorrichtung mit Führungsvorrichtung vorgesehen ist und die Führungsvorrichtung drei Bereiche mit unterschiedlichen Größen von nutförmigen Aufnahmeelemente zur Aufnahme der Enden der geraden Leiterstababschnitte aufweist, wobei der erste Bereich an dem ersten Ende der nicht-geschlossenen ringförmigen Wicklungsstruktur und der dritte Bereich an dem zweiten Ende der offenen ringförmigen Wicklungsstruktur vorgesehen ist und der zweite Bereich zwischen dem ersten und dem dritten Bereich angeordnet ist, und die Größe der nutförmigen Aufnahmeelemente der Bereiche so ausgestaltet ist, dass die radiale Ausdehnung der nutförmigen Aufnahmeelement in dem ersten Bereich und in dem dritten Bereich jeweils im Mittel geringer ist als die radiale Ausdehnung der nutförmigen Aufnahmeelemente im zweiten Bereich und die beiden Enden der offenen ringförmigen Wicklungsstruktur im Überlappungsbereich radial zur Bildung der geschlossenen ringförmigen Wicklungsstruktur zusammen geführt werden und im Überlappungsbereich jeweils ein Aufnahmeelement des ersten Bereichs mit jeweils einem Aufnahmeelement des dritten Bereichs ein Paar von radial benachbart angeordneten Aufnahmeelementen bildet.

8. Verfahren zur Herstellung einer elektromagnetischen Wicklung eines Stators und/oder Rotors aus mehreren, nach dem Verfahren nach einem der Ansprüche 1 bis 7 hergestellten Wicklungskörben mit unterschiedlichem Durchmesser, **dadurch gekennzeichnet, dass** die Wicklungskörbe konzentrisch ineinander angeordnet werden und damit die Wicklung des Stators ergeben.

9. Vorrichtung zur Herstellung eines Wicklungskorbes einer elektromagnetischen Wicklung eines Stator und/oder Rotors aus einer Vielzahl von elektrisch leitfähigen U-förmigen Leiterstäben, wobei jeder Leiterstab zwei im wesentlichen gerade Leiterstababschnitten aufweist, die durch einen Verbindungsabschnitt verbunden sind, und wobei die Leiterstäbe außerhalb des Stators und/oder Rotors mit einer geeigneten Vorsteckvorrichtung vorgesteckt werden, **dadurch gekennzeichnet, dass** die Vorsteckvorrichtung eine Führungseinrichtung aufweist, so dass die Leiterstäbe durch die Führungseinrichtung in einer offenen ringförmigen Wicklungsstruktur mit in radialer Richtung mit einem Mindestabstand überlappend anordenbaren Enden positionierbar sind.

10. Vorrichtung nach Anspruch 9, **dadurch gekennzeichnet, dass** der Mindestabstand der beiden Enden der nicht-geschlossenen ringförmigen Wicklungsstruktur in radialer Richtung 1 mm, vorzugsweise 5 mm, besonders bevorzugt 18 mm, beträgt.

11. Vorrichtung nach Anspruch 9 oder 10, **dadurch gekennzeichnet, dass** die Führungseinrichtung der Vorsteckvorrichtung so eingerichtet ist, dass die nicht geschlossene ringförmige Wicklungsstruktur auf einer gekrümmten Linie mit mindestens einer Windung um einen festen Punkt anordenbar ist.

12. Vorrichtung nach einem der vorhergehenden Ansprüche, **dadurch gekennzeichnet, dass** die Vorsteckvorrichtung zweiteilig aufgebaut ist und ein erster Teil der Vorsteckvorrichtung einen ersten Teil der Führungseinrichtung aufweist, wobei der erste Teil der Führungseinrichtung einen inneren und äußeren Ring aufweist, wobei zwischen dem ersten Ring und dem zweiten Ring ein Führungskanal eingerichtet ist, wobei der Führungskanal spiralähnlich um ein Zentrum herum geführt wird und sich der radiale Abstand des Führungskanals zum Zentrum hin über zumindest einen Teil der Länge des Führungskanals zumindest abschnittsweise verringert.

13. Vorrichtung nach Anspruch 12, **dadurch gekennzeichnet, dass** der zweite Teil der Vorsteckvorrichtung einen zweiten Teil der Führungseinrichtung aufweist, wobei in dem zweiten Teil der Führungseinrichtung eine Vielzahl von ringförmig angeordneten und axial verlaufenden Nuten um ein Zentrum vorgesehen ist, wobei die Nuten zur Aufnahme der im wesentlichen geraden Leiterstababschnitten der elektrisch leitfähigen U-förmigen Leiterstäbe vorgesehen sind und wobei
a. der Nutquerschnitt an der Einführseite der Nuten größer ist als der Querschnitt in einem beliebigen Bereich der axialen Längserstreckung der Nut und/oder
b. die im wesentlichen geraden Leiterstababschnitte je Nut durch ein, insbesondere federndes, Druckelement, vorzugsweise in einer Schrägstellung des geraden Leiterstababschnittes, axial und/oder radial fixierbar sind.

14. Vorrichtung nach einem der Ansprüche 9 bis 13, **dadurch gekennzeichnet, dass** der zweite Teil der Vorsteckvorrichtung gegenüber dem ersten Teil Vorsteckvorrichtung drehbar gelagert ist und über einen Drehantrieb verfügt.

15. Vorrichtung nach einem der Ansprüche 9 bis 12, **dadurch gekennzeichnet, dass** die Führungsvorrichtung kranzförmig ausgeführt ist und definierte nutförmige Aufnahmeelemente aufweist, die zur Aufnahme der Enden der im wesentlichen geraden Leiterstababschnitten der elektrisch leitfähigen U-förmigen Leiterstäbe geeignet sind und die Führungseinrichtung zumindest im Überlappungsbereich zumindest teilweise elastisch um den Mindestabstand verformbar ist, so dass durch Zusammenführen der beiden Enden der offenen Wicklungsstruktur eine geschlossene ringförmige Wicklungsstruktur herstellbar ist.

16. Vorrichtung nach Anspruch 15, **dadurch gekennzeichnet, dass** die Führungsvorrichtung drei Bereiche mit unterschiedlichen Größen der nutförmigen Aufnahmeelemente aufweist, wobei der erste Bereich an dem ersten Ende der nicht-geschlossenen ringförmigen Wicklungsstruktur und der dritte Bereich an dem zweiten Ende der offenen ringförmigen Wicklungsstruktur vorgesehen ist und der zweite Bereich zwischen dem ersten und dem dritten Bereich angeordnet ist, und die Größe der nutförmigen Aufnahmeelemente der Bereiche so ausgestaltet ist, dass die radiale Ausdehnung der nutförmigen Aufnahmeelement in dem ersten Bereich und in dem dritten Bereich jeweils im Mittel geringer ist als die radiale Ausdehnung der nutförmigen Aufnahmeelemente im zweiten Bereich und die beiden Enden der offenen ringförmigen Wicklungsstruktur im Überlappungsbereich radial zur Bildung der geschlossenen ringförmigen Wicklungsstruktur zusammen geführt werden und im Überlappungsbereich jeweils ein Aufnahmeelement des ersten Bereichs mit jeweils einem Aufnahmeelement des dritten Bereichs ein Paar von radial benachbart angeordneten Aufnahmeelementen bildet.
